# EUROPEAN PATENT SPECIFICATION

(11) **EP 4 484 770 B1**
(45) Date of publication and mention of the grant of the patent: **21.01.2026**
(21) Application number: 23182343.6
(22) Date of filing: 29.06.2023
(51) Int. Cl.: F16B 25/00, F16B 25/10

(54) **SCREW**
SCHRAUBE
VIS

(43) Date of publication of application: 01.01.2025
(73) Proprietor: Taiwan Shan Yin International Co., Ltd., Kaohsiung City 82059 (TW)
(72) Inventor: SU, Kou-Tsair, 806 Kaohsiung City (TW); SU, Chen-Long, 800 Kaohsiung City (TW)
(74) Representative: Cabinet Chaillot

(56) References cited:
- EP-A1- 3 875 789
- DE-U1- 202011 000 982

## Description

### BACKGROUND OF THE INVENTION

### 1. Field of the Invention

This invention relates to a screw and relates particularly to a screw capable of providing enough spaces for moving and accommodating chips, reducing screwing resistance, and attaining a tight engagement.

### 2. Description of the Related Art

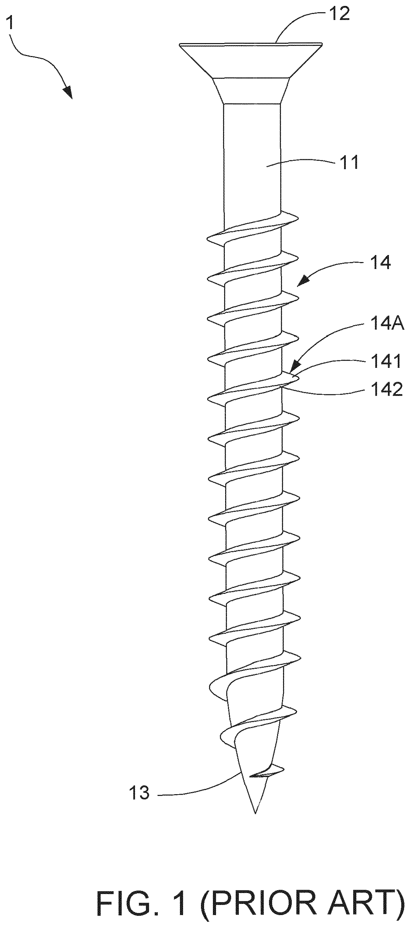

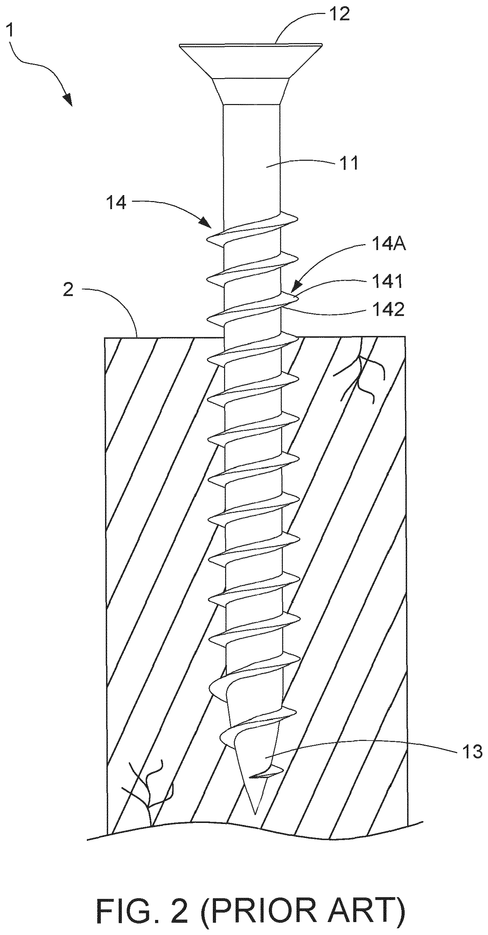

Referring to Figs. **1** and **2****,** a conventional screw **1** comprises a shank **11** having a first end and a second end opposite to the first end, a head **12** disposed at the first end of the shank **11,** a drill section **13** disposed at the second end of the shank **11,** and a threaded section **14** spirally disposed on the shank **11.** The thread section **14** has a plurality of thread convolutions **14A** disposed between the first end and the second end of the shank **11** in a spiral direction. Each thread convolution **14A** has an upper thread flank **141** facing the head **12** and a lower thread flank **142** facing the drill section **13.** The upper thread flank **141** and the lower thread flank **142** of each thread convolution **14A** extend outwards from the shank **11** respectively and connect together. During a screwing operation, the drill section **13** is positioned at a surface of a workpiece 2. The head **12** then receives a rotational force in order to carry out a cutting operation of the thread convolutions **14A** into the workpiece **2** and synchronously to screw the shank **11** into the workpiece **2** gradually whereby the screwing operation is completed.

However, the screw 1 is provided without enough spaces for accommodating and moving chips generated during the screwing operation. The chips are discharged only through the spaces formed between the thread convolutions 14A and the shank 11, but the spaces are narrow. Therefore, the chips are discharged slowly, and that will increase the screwing resistance. The screw 1 cannot screw into the workpiece 2 quickly. If the screw 1 keeps pressing the chips, the workpiece 2 may crack. Further, the screw 1 cannot hold the remaining chips, and that will result in a poor engagement between the screw 1 and the workpiece 2. The screw 1 may be loose and fall from the workpiece 2, and that requires to be improved.

DE 20 2011 000982 U1 discloses a screw according to the preamble of claim 1. The screw includes a screw head, a shank, threads, and an auxiliary zone between any two adjacent threads. The auxiliary zone includes a chip-cutting section connected to one thread and a chip-guiding section formed between the chip-cutting section and another adjacent thread for removing chips. The chip-cutting section further includes a plurality of teeth arranged by an angle different from a spiral angle of the threads.

EP 3 875 789 A1 discloses a screw with a thread spirally disposed thereon. The screw includes a shank, and the shank has a threaded segment, a cutting segment, and tapered segment sequentially arranged downwardly. Multiple cutting ribs are arranged around the shank on the cutting segment. Each of the cutting ribs has a rounded crest to enlarge a drill hole and reduce resistance while drilling. Multiple chip recesses are formed between the cutting ribs.

### SUMMARY OF THE INVENTION

The object of this invention is to provide a screw capable of providing enough spaces for chips exclusion and accommodation, reducing screwing resistance, increasing screwing speed, and achieving a tight engagement between the screw and a workpiece.

The screw of this invention is as defined in claim 1 and comprises a shank defining a surface portion exposed outside and having opposite first and second ends, a head formed at the first end, a drill section formed at the second end, a threaded section having a plurality of thread convolutions formed between the first end and the second end in a spiral direction, a groove recessedly formed in the surface portion and extending annularly in the spiral direction, and a slot region recessedly formed in the surface portion and arranged along the spiral direction. Each thread convolution has an upper thread flank and a lower thread flank facing opposite directions. The groove is situated between at least one upper thread flank and the slot region. The slot region has a plurality of slots extending axially from at least one lower thread flank and meeting the groove, thereby communicating the slots with the groove. During a screwing operation, the groove and the slots enlarge spaces for discharging and holding chips. The chips are excluded through the groove along the thread convolutions, and simultaneously enter into the slots through the groove. Thus, the chips are removed quickly without accumulating unduly to thereby reduce the screwing resistance, accelerate the screwing operation, and prevent a workpiece from cracking caused by pressing the accumulated chips. Further, the groove and the slots are adapted to accommodate the remainder of chips properly after the screw is embedded in the workpiece to thereby attain a tight engagement between the screw and the workpiece and attain an anti-loosening effect.

Preferably, the groove extends annularly between some of the thread convolutions.

Preferably, the slot region is arranged between some of the thread convolutions.

Preferably, a maximum depth of each slot is different from a maximum depth of the groove.

Preferably, the shank defines a central axis. The extension of the slots is parallel to the central axis of the shank.

Preferably, the shank defines a central axis. The extension of the slots is inclined to the central axis of the shank.

Preferably, the groove has an arcuate cross section so that the groove is curved in shape.

Preferably, each slot has an arcuate cross section so that each slot is curved in shape.

### BRIEF DESCRIPTION OF THE DRAWINGS

Fig. **1** is a schematic view showing a conventional screw;
Fig. **2** is a schematic view showing a screwing operation of the conventional screw;
Fig. **3** is a perspective view showing a first preferred embodiment of this invention;
Fig. **4** is a cross-sectional view showing the maximum depth of the groove and the maximum depth of the slot;
Fig. **5** is a schematic view showing a screwing operation of the first preferred embodiment of this invention;
Fig. **6** is a schematic view showing a second preferred embodiment of this invention; and
Fig. **6A** is an enlarged view of the encircled portion 6A indicated in Fig. 6.

### DETAILED DESCRIPTION OF THE PREFERRED EMBODIMENTS

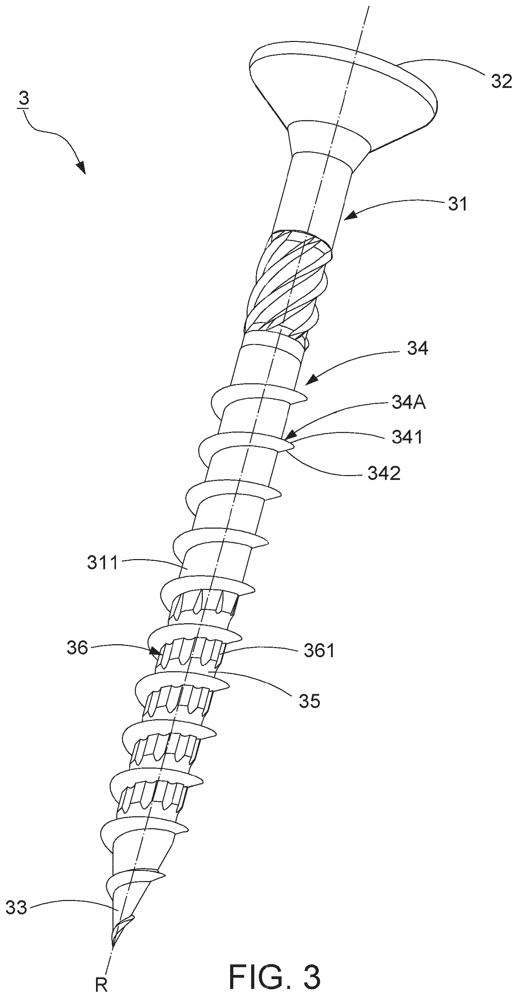

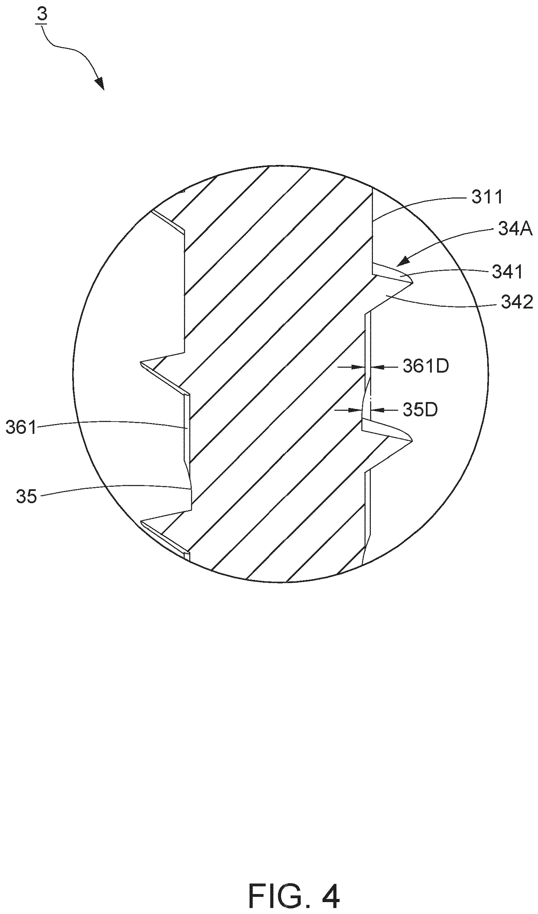

Referring to Figs. **3** and **4****,** a first preferred embodiment of a screw **3** of this invention is disclosed. The screw **3** includes a shank **31** having a first end and a second end opposite to the first end, a head **32** disposed at the first end of the shank **31,** a drill section **33** disposed at the second end of the shank **31,** a threaded section **34** spirally disposed on the shank **31,** a groove **35** and a slot region **36** recessedly formed in the shank **31.** The threaded section **34** has a plurality of thread convolutions **34A** disposed between the first end and the second end of the shank **31** in a spiral direction. The shank **31** defines a central axis R and has a surface portion **311** exposed to an outside when adjacent thread convolutions **34A** separate axially from each other in an axial direction. In this preferred embodiment, the groove **35** extends between some thread convolutions **34A,** such as between five or six thread convolutions **34A.** The slots region **36 is** situated between some thread convolutions **34A,** such as between four or five thread convolutions **34A.**

Each thread convolution **34A** has an upper thread flank **341** facing the head **32** and a lower thread flank **342** facing the drill section **33.** The upper thread flank **341** and the lower thread flank **342** of each thread convolution **34A** slantingly extend outwards from the shank **31** respectively and connect together. The groove **35** is recessedly formed in the surface portion **311** and extends annularly in the spiral direction of the threaded section **34** to be situated between at least one upper thread flank **341** and the slot region **36.** The slot region **36** is recessedly formed in the surface portion **311** and arranged along the spiral direction. The slot region **36** has a plurality of slots **361** extending in the axial direction and situated between the groove **35** and at least one lower thread flank **342.** The slots **361** extend from the lower thread flank **342** and meet the groove **35** to thereby communicate with the groove **35.** In this preferred embodiment, each slot **361** extends in a direction parallel to the central axis **R** of the shank **31.** The groove **35** and the slots **361** are curved in shape. A maximum depth **361D** of each slot **361** is different from a maximum depth **35D** of the groove **35** as shown in Fig. **4****.**

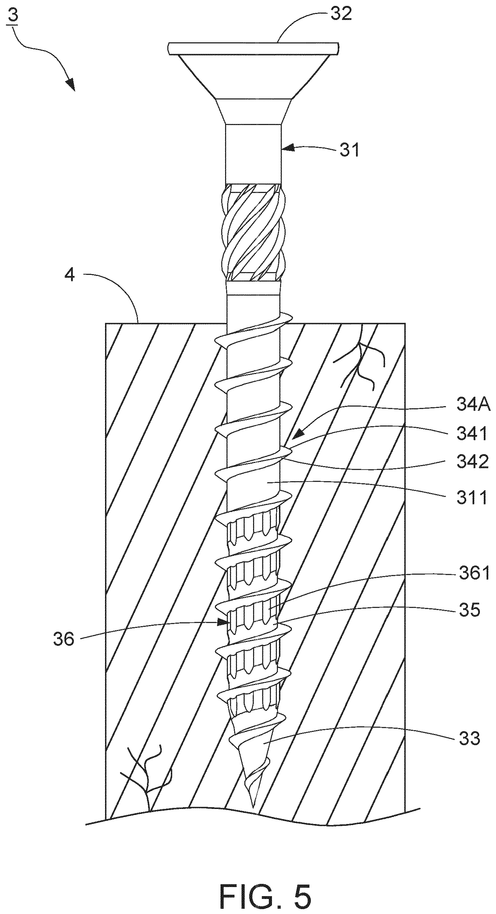

Referring to Figs. **3****,** **4** and **5****,** a screwing operation of the screw **3** begins with positioning the drill section **33** against a surface of a workpiece **4.** A rotational force is then applied to the head **32** in order to carry out a cutting operation of the drill section **33** and the thread convolutions **34A.** Chips generated during the cutting operation are discharged outwards along the thread convolutions **34A** thereafter. Because the shank **31** is provided with the slots **361** and the groove **35** formed recessedly in the surface portion **311,** the slots **361** and the groove **35** helps enlarge spaces for moving and accommodating the chips. Thus, the chips travel along the groove **35,** through the slots **361,** and finally to the outside. In other words, the chips move from the groove **35** to the slots **361** when the slots **361** communicate with the groove **35** to thereby attain a quick and smooth removal of the chips, reduce the screwing resistance greatly, and prevent the screw **3** from being hindered by the chips during the screwing operation. Accordingly, the screw **3** can be screwed into the workpiece **4** speedily to increase the screwing speed. Meanwhile, the chips will not accumulate unduly. Without the unduly accumulated chips, the screw **3** can be screwed into the workpiece **4** smoothly, which prevents the workpiece **4** from cracking. After the screw **3** is embedded in the workpiece **4,** some remaining chips are held within the groove **35** and the slots **361** to thereby attain a tight engagement between the screw **3** and the workpiece **4,** prevent the screw **3** from being loose, and attain an anti-loosening effect.

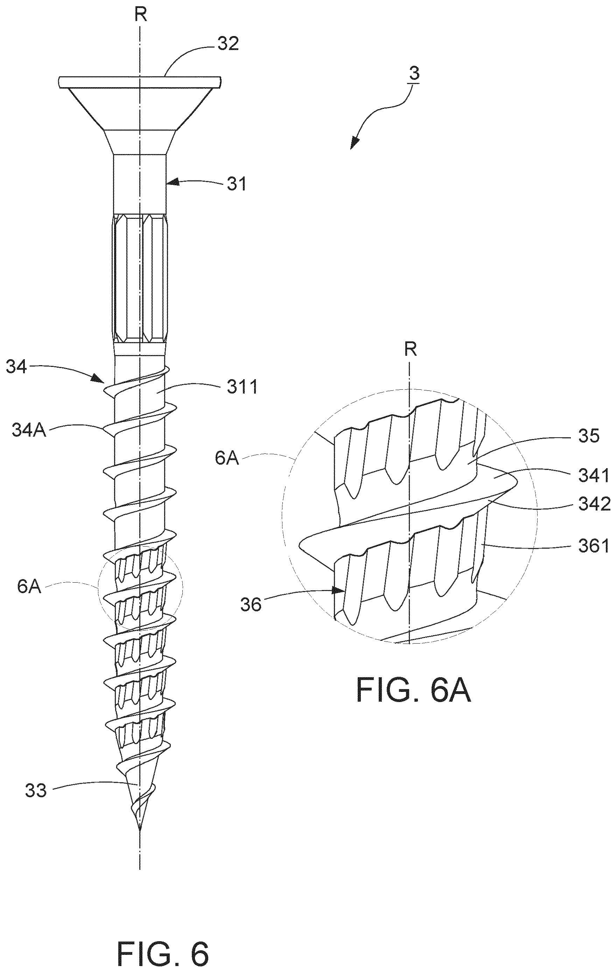

Referring to Figs. **6** and **6A****,** a second preferred embodiment of the screw **3** of this invention is shown. The correlated elements and the concatenation of elements, the operation and objectives of the second preferred embodiment are the same as those of the first preferred embodiment. This embodiment is characterized in that each slot **361** extends in a direction inclined to the central axis **R** of the shank **31.** An inclined direction of the slots **361** can be varied according to needs. Thus, the screwing direction of the screw **3** allows the chips to enter into the inclined slots **361** easily through the groove **35,** thereby discharging the chips outwards quickly and smoothly. Further, the slots **361** and the groove **35** can also accommodate the remainder of chips properly, so the screw **3** engages with the workpiece **4** tightly.

To sum up, the screw of this invention takes an advantage that the groove and the slot region are recessedly formed in the surface portion of the shank. The groove extends spirally in the spiral direction of the threaded section and situated between at least one upper thread flank and the slot region. The slots of the slot region extend axially from at least one lower thread flank to further meet and communicate with the groove. Hence, the groove and the slots allow the chips to be removed speedily to thereby reduce the screwing resistance, increase the screwing speed, and accelerate the screwing operation. Further, the groove and the slots are also adapted to accommodate sufficient chips duly to thereby attain the stable engagement between the screw and the workpiece and attain the anti-loosening effect.

While the embodiments of this invention are shown and described, it is understood that further variations and modifications may be made without departing from the scope of this invention, as defined by the appended claims.

## Claims

1. A screw (3) comprising a shank (31) having opposite first and second ends, a head (32) disposed at said first end, a drill section (33) disposed at said second end, and a threaded section (34) including a plurality of thread convolutions (34A) disposed between said first end and said second end in a spiral direction, each of said plurality of thread convolutions (34A) having an upper thread flank (341) facing said head (32) and a lower thread flank (342) facing said drill section (33) , said shank (31) defining a surface portion (311) exposed to an outside when adjacent thread convolutions (34A) are axially spaced apart in an axial direction;
**characterized in that** a groove (35) and a slot region (36) are in the form of depressions to be recessedly formed in said surface portion (311) between any two adjacent thread convolutions (34A), said recessedly-formed groove (35) extending annularly in said spiral direction of said threaded section (34) and situated between said upper thread flank (341) of said two adjacent thread convolutions (34A) and said slot region (36), said slot region (36) including a plurality of slots (361) recessedly formed in said surface portion (311) and arranged along said spiral direction, said slot region (36) being situated between said groove (35) and said lower thread flank (342) of said two adjacent thread convolutions (34A), with said plurality of slots (361) of said slot region (36) extending from said lower thread flank (342) of said two adjacent thread convolutions (34A) to said groove (35) in said axial direction, thereby allowing said plurality of slots (361) to communicate with said groove (35).

2. The screw (3) according to claim 1, wherein said groove (35) extends annularly between some of said thread convolutions (34A).

3. The screw (3) according to any one of claims 1 to 2, wherein said slot region (36) is arranged between some of said thread convolutions (34A).

4. The screw (3) according to any one of claims 1 to 3, wherein a maximum depth (361D) of each of said plurality of slots (361) is different from a maximum depth (35D) of said groove (35).

5. The screw (3) according to any one of claims 1 to 4, wherein said shank (31) defines a central axis (R), the extension of said plurality of slots (361) being parallel to said central axis (R) of said shank (31).

6. The screw (3) according to any one of claims 1 to 5, wherein said shank (31) defines a central axis (R), the extension of said plurality of slots (361) being inclined to said central axis (R) of said shank (31).

7. The screw (3) according to any one of claims 1 to 6, wherein said groove (35) has an arcuate cross section so that said groove (35) is curved in shape.

8. The screw (3) according to any one of claims 1 to 7, wherein each of said plurality of slots (361) has an arcuate cross section so that each said slot (361) is curved in shape.

## Patentansprüche

1. - Schraube (3), umfassend einen Schaft (31), der gegenüberliegend ein erstes und ein zweites Ende aufweist, einen Kopf (32), der an dem ersten Ende angeordnet ist, einen Bohrabschnitt (33), der an dem zweiten Ende angeordnet ist, einen Gewindeabschnitt (34), der eine Vielzahl von Gewindegängen (34A) beinhaltet, die in einer Spiralrichtung zwischen dem ersten Ende und dem zweiten Ende angeordnet sind, wobei jeder der Vielzahl von Gewindegängen (34A) eine obere Gewindeflanke (341), die dem Kopf (32) zugewandt ist, und eine untere Gewindeflanke (342), die dem Bohrabschnitt (33) zugewandt ist, aufweist, der Schaft (31) einen Oberflächenabschnitt (311) definiert, der zu einer Außenseite freiliegt, wenn benachbarte Gewindegänge (34A) in einer axialen Richtung axial beabstandet sind;
**dadurch gekennzeichnet, dass** eine Rille (35) und ein Schlitzbereich (36) in der Form von Vertiefungen sind, die in dem Oberflächenabschnitt (311) zwischen zwei beliebigen benachbarten Gewindegängen (34A) vertieft zu bilden sind, wobei sich die vertieft gebildete Rille (35) ringförmig in der Spiralrichtung des Gewindeabschnitts (34) erstreckt und sich zwischen der oberen Gewindeflanke (341) der zwei benachbarten Gewindegänge (34A) und dem Schlitzbereich (36) befindet, der Schlitzbereich (36) eine Vielzahl von Schlitzen (361) beinhaltet, die vertieft in dem Oberflächenabschnitt (311) gebildet und entlang der Spiralrichtung angeordnet sind,
sich der Schlitzbereich (36) zwischen der Rille (35) und der unteren Gewindeflanke (342) der zwei benachbarten Gewindegänge (34A) befindet, wobei sich die Vielzahl von Schlitzen (361) des Schlitzbereichs (36) von der unteren Gewindeflanke (342) der zwei benachbarten Gewindegänge (34A) zu der Rille (35) in der axialen Richtung erstreckt, was es der Vielzahl von Schlitzen (361) ermöglicht, mit der Rille (35) in Verbindung zu sein.

2. - Schraube (3) nach Anspruch 1, wobei sich die Rille (35) ringförmig zwischen einigen der Gewindegänge (34A) erstreckt.

3. - Schraube (3) nach einem der Ansprüche 1 bis 2, wobei der Schlitzbereich (36) zwischen einigen der Gewindegänge (34A) angeordnet ist.

4. - Schraube (3) nach einem der Ansprüche 1 bis 3, wobei eine maximale Tiefe (361D) von jedem der Vielzahl von Schlitzen (361) von einer maximalen Tiefe (35D) der Rille (35) verschieden ist.

5. - Schraube (3) nach einem der Ansprüche 1 bis 4, wobei der Schaft (31) eine Mittelachse (R) definiert, die Erstreckung der Vielzahl von Schlitzen (361) parallel zu der Mittelachse (R) des Schafts (31) ist.

6. - Schraube (3) nach einem der Ansprüche 1 bis 5, wobei der Schaft (31) eine Mittelachse (R) definiert, die Erstreckung der Vielzahl von Schlitzen (361) geneigt zu der Mittelachse (R) des Schafts (31) ist.

7. - Schraube (3) nach einem der Ansprüche 1 bis 6, wobei die Rille (35) einen bogenförmigen Querschnitt aufweist, sodass die Rille (35) von gekrümmter Form ist.

8. - Schraube (3) nach einem der Ansprüche 1 bis 7, wobei jeder der Vielzahl von Schlitzen (361) einen bogenförmigen Querschnitt aufweist, sodass jeder Schlitz (361) von gekrümmter Form ist.

## Revendications

1. - Vis (3) comprenant une tige (31) ayant des première et seconde extrémités opposées, une tête (32) disposée à ladite première extrémité, une section de perçage (33) disposée à ladite seconde extrémité, et une section filetée (34) comprenant une pluralité de circonvolutions de filet (34A) disposées entre ladite première extrémité et ladite seconde extrémité dans une direction de spirale, chacune de ladite pluralité de circonvolutions de filet (34A) ayant un flanc de filet supérieur (341) tourné vers ladite tête (32) et un flanc de filet inférieur (342) tourné vers ladite section de perçage (33), ladite tige (31) définissant une partie de surface (311) exposée à un extérieur lorsque des circonvolutions de filet adjacentes (34A) sont espacées axialement dans une direction axiale ;
**caractérisée par le fait qu'**une rainure (35) et une région à fentes (36) se présentent sous la forme de creux à former en retrait dans ladite partie de surface (311) entre n'importe quelles deux circonvolutions de filet adjacentes (34A), ladite rainure formée en retrait (35) s'étendant de façon annulaire dans ladite direction de spirale de ladite section filetée (34) et étant située entre ledit flanc de filet supérieur (341) desdites deux circonvolutions de filet adjacentes (34A) et ladite région à fentes (36), ladite région à fentes (36) comprenant une pluralité de fentes (361) formées en retrait dans ladite partie de surface (311) et disposées le long de ladite direction de spirale, ladite région à fentes (36) étant située entre ladite rainure (35) et ledit flanc de filet inférieur (342) desdites deux circonvolutions de filet adjacentes (34A), ladite pluralité de fentes (361) de ladite région à fentes (36) s'étendant à partir dudit flanc de filet inférieur (342) desdites deux circonvolutions de filet adjacentes (34A) jusqu'à ladite rainure (35) dans ladite direction axiale, permettant ainsi à ladite pluralité de fentes (361) de communiquer avec ladite rainure (35).

2. - Vis (3) selon la revendication 1, dans laquelle ladite rainure (35) s'étend de façon annulaire entre certaines desdites circonvolutions de filet (34A).

3. - Vis (3) selon l'une quelconque des revendications 1 et 2, dans laquelle ladite région à fentes (36) est disposée entre certaines desdites circonvolutions de filet (34A).

4. - Vis (3) selon l'une quelconque des revendications 1 à 3, dans laquelle une profondeur maximale (361D) de chacune de ladite pluralité de fentes (361) est différente d'une profondeur maximale (35D) de ladite rainure (35).

5. - Vis (3) selon l'une quelconque des revendications 1 à 4, dans laquelle ladite tige (31) définit un axe central (R), l'étendue de ladite pluralité de fentes (361) étant parallèle audit axe central (R) de ladite tige (31).

6. - Vis (3) selon l'une quelconque des revendications 1 à 5, dans laquelle ladite tige (31) définit un axe central (R), l'étendue de ladite pluralité de fentes (361) étant inclinée par rapport audit axe central (R) de ladite tige (31).

7. - Vis (3) selon l'une quelconque des revendications 1 à 6, dans laquelle ladite rainure (35) a une section transversale arquée de telle sorte que ladite rainure (35) est de forme incurvée.

8. - Vis (3) selon l'une quelconque des revendications 1 à 7, dans laquelle chacune de ladite pluralité de fentes (361) a une section transversale arquée de telle sorte que chaque fente (361) est de forme incurvée.
